# EUROPÄISCHE PATENTSCHRIFT

(11) **EP 1 670 841 B1**
(45) Veröffentlichungstag und Bekanntmachung des Hinweises auf die Patenterteilung: **30.05.2012**
(21) Anmeldenummer: 04765570.9
(22) Anmeldetag: 24.09.2004
(51) Int. Cl.: C08G 18/40, C08G 18/63

(54) **VERFAHREN ZUR HERSTELLUNG VON POLYOLMISCHUNGEN**
METHOD FOR THE PRODUCTION OF POLYOL MIXTURES
PROCEDE DE PRODUCTION DE MELANGES DE POLYOLS

(30) Priorität: 29.09.2003 DE 10345603
(43) Veröffentlichungstag der Anmeldung: 21.06.2006
(73) Patentinhaber: BASF SE, 67056 Ludwigshafen (DE)
(72) Erfinder: DREISÖRNER, Jan-Michael, 32609 Hüllhorst (DE); KNAKE, Johann, 49457 Drebber (DE); THOMAS, Maria, 49439 Mühlen (DE); WENZEL, Marion, 32351 Stemwede-Haldem (DE); ZASCHKE, Bernd, 01561 Schönfeld (DE)
(86) Internationale Anmeldenummer: PCT/EP2004/010722
(87) Internationale Veröffentlichungsnummer: WO 2005/033168

(56) Entgegenhaltungen:
- EP-A- 0 097 458
- EP-A- 0 149 236
- EP-A- 0 353 061
- WO-A-03/078496
- US-A- 5 730 909

## Beschreibung

Gegenstand der Erfindung ist ein Verfahren zur Herstellung von Polyolmischungen, wie sie zur Herstellung von Polyurethanen eingesetzt werden können.

Die Herstellung von Polyurethanen durch Umsetzung von Polyisocyanaten mit Verbindungen mit mindestens zwei mit Isocyanatgruppen reaktiven Wasserstoffatomen ist seit langem bekannt und wurde vielfach beschrieben. Als Verbindungen mit mindestens zwei mit Isocyanatgruppen reaktiven Wasserstoffatomen werden zumeist Polyole, insbesondere Polyetheralkohole und/oder Polyesteralkohole, eingesetzt. Für viele Anwendungsfälle werden Polyole eingesetzt, die Füllstoffe enthalten. Häufig werden als Füllstoffe Polymerisate aus ethylenisch ungesättigten Verbindungen, insbesondere Styrol und/oder Acrylnitril, die in-situ im Polyol erzeugt werden, eingesetzt. Derartige Polyole, häufig auch als Polymer-Polyole oder Graft-Polyole bezeichnet, sind ebenfalls allgemein bekannt und beispielsweise im Kunststoffhandbuch, Band 7 "Polyurethane", 3. Auflage 1993, Carl-Hanser-Verlag München Wien, im Abschnitt 3.3.1.1, näher beschrieben.

Die Graft-Polyole werden zumeist bei der Herstellung von Polyurethan-Weichschaumstoffen eingesetzt. In der Praxis hat es sich bewährt, Graft-Polyole mit einem hohen Gehalt an Polymerisat, im folgenden auch als Füllstoff bezeichnet, herzustellen und dieses dann mit ungefüllter Polyol zu mischen, um so den Gehalt an Füllstoffen den jeweiligen Erfordernissen anzupassen. So kann das Sortiment an Graft-Polyolen verkleinert werden, was zu einer besseren Auslastung der Produktionsanlagen und zu einer Vereinfachung der Lagerhaltung führt. Üblicherweise erfolgt der Einsatz der Graft-Polyole daher im Gemisch mit anderen Polyolen.

So ist in PCT/EP03/02576 beschrieben, Graft-Polyole mit einem Gehalt an Feststoffen im Bereich zwischen 30 und 65 Gew.% zu produzieren und danach durch Mischung mit anderen Polyolen den gewünschten Feststoffgehalt in der Polyolmischung einzustellen. Die Vermischung erfolgt dabei diskontinuierlich, zumeist in Rührkesseln.

Zumeist wird diese Mischung der Graft-Polyole mit den anderen Polyolen unmittelbar vor der Herstellung der Polyurethane vorgenommen. Ebenfalls üblich ist es, die einzelnen Polyole getrennt voneinander in die Dosiereinrichtung für die Polyurethan-Herstellung zu dosieren. Dabei hat es sich allerdings gezeigt, dass die so hergestellten Polyurethane eine unzureichende Qualität aufweisen. So haben die Schaumstoffe eine ungleichmäßige, gestörte Schaumstruktur und neigen zur Rissbildung.

Aufgabe der Erfindung war es daher, ein Verfahren zur Herstellung von Graft-Polyole enthaltenden Polyol-Mischungen zu finden, die zu Polyurethanen, insbesondere Polyurethan-Schaumstoffen mit guter Qualität verarbeitet werden können.

Es wurde nun überraschenderweise gefunden, dass stabile Mischungen von Graft-Polyolen mit anderen Polyolen erhalten und zu Polyurethanen mit guter Qualität, insbesondere zu Polyurethan-Schaumstoffen mit einer gleichmäßigen Schaumstruktur und guten mechanischen Eigenschaften weiterverarbeitet werden können, wenn die Mischung vor der eigentlichen Polyurethan-Herstellung erfolgt und mit einer hohen Mischgüte durchgeführt wird.

Die hohe Mischgüte erfolgt erfindungsgemäß durch eine kontinuierliche Vermischung unter Verwendung eines statischen Mischers. Hierdurch kommt es zu einer besonders gründlichen und schonenden Vermischung.

Gegenstand der Erfindung ist somit ein Verfahren zur Herstellung von Mischungen aus Polyolen zu Weiterverarbeitung zu Polyurethanen, enthaltend mindestens ein Graft-Polyol, dadurch gekennzeichnet, dass die Vermischung der Polyole zwischen der Herstellung der Polyole und der Herstellung der Polyurethane mittels eines kontinuierlichen Mischverfahrens mit einem statischen Mischer erfolgt.

Gegenstand der Erfindung ist weiterhin ein Verfahren zur Herstellung von Polyurethanen durch Umsetzung von
a) Polyisocyanaten mit
b) Verbindungen mit mindestens zwei mit Isocyanatgruppen reaktiven Wasserstoffatomen,
dadurch gekennzeichnet, dass als Verbindungen mit mindestens zwei mit isocyanatgruppen reaktiven Wasserstoffatomen b) Mischungen aus Polyolen verwendet werden, die mindestens ein Graft-Polyol enthalten, und die Vermischung der Polyole zwischen der Herstellung der Polyole und der Herstellung der Polyurethane erfolgt und mittels eines kontinuierlichen Mischverfahrens mit einem statischen Mischer durchgeführt wird.

Bei den nach dem erfindungsgemäßen Verfahren hergestellten Polyurethanen handelt es sich zumeist um Polyurethan-Weichschaumstoffe.

Bei den zur Herstellung der Polyolmischungen eingesetzten Graft-Polyolen kann es sich um Polyetheralkohole oder Polyesteralkohole handeln. Geeignete Graft-Polyetheralkohole sind beispielsweise beschrieben in PCT/EP03/02576. Graft-Polyesteralkohole sind beispielsweise beschrieben in EP 622384.

Ihre Herstellung erfolgt, wie bereits ausgeführt, durch Polymerisation von olefinisch ungesättigten Monomeren, zumeist Styrol und Acrylnitril, in Polyolen, zumeist als Träger-Polyle bezeichnet. Um die Stabilität der Graft-Polyole zu gewährleisten und ein Absinken der Teilchen zu verhindern, ist es bevorzugt, die Polymerisation im Beisein von Polyolen mit eingebauten ungesättigten Gruppen, häufig als Makromere bezeichnet, durchzuführen, oder Trägerpolyole mit ungesättigten Gruppen einzusetzen.

Die Polymere liegen in den Träger-Polyolen üblicherweise in Form von Teilchen vor. Diese haben zumeist einen Durchmesser im Bereich zwischen 0,1 und 4 µm. Teilchen mit größeren Durchmessern würden bei der Weiterverarbeitung der Graft-Polyole zu Problemen führen.

Für die Herstellung von Polyurethan-Weichschaumstoffen geeignete Graft-Polyole haben zumeist eine Hydroxylzahl im Bereich zwischen 10 und 50 mgKOH/g, vorzugsweise zwischen 15 und 45 mgKOH/g. Als Träger-Polyole werden zumeist übliche Weichschaum-Polyetheralkohole eingesetzt. Diese haben zumeist eine Hydroxylzahl im Bereich zwischen 20 und 100 mgKOHlg und werden üblicherweise hergestellt durch Anlagerung von Alkylenoxiden an zwei- und dreifunktionelle Alkohole, wie Glycerin, Trimethylolpropan, Ethylenglykol oder Propylenglykol.

Als Alkohole, die mit den Graft-Polyolen gemischt werden können, kommen zumeist die zur Herstellung von Polyurethan-Schaumstoffen üblichen und bekannten Polyether-und/oder Polyesteralkohole zum Einsatz.

Geeignete Polyesteralkohole können beispielsweise aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalin-dicarbonsäuren, vorzugsweise Adipinsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. e-Caprolacton oder Hydroxycarbonsäuren, beispielsweise Hydroxycapronsäure und Hydroxybenzoesäuren.

Die Hydroxylzahl der Polyesteralkohole liegt vorzugsweise im Bereich zwischen 40 und 100 mgKOH/g.

Die eingesetzten Polyetheralkohole werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome ge-bunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2 bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird (EO-cap), so dass die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin, Trimethylolpropan usw. Die Polyetheralkohole, vorzugsweise Polyoxypropylen-polyoxyethylenpolyole, besitzen eine Funktionalität von 2 bis 3 und Molekulargewichte von 1.000 bis 8.000, vorzugsweise 2.000 bis 7.000.

Als Mischapparate werden erfindungsgemäß statische Mischer eingesetzt. Derartige Apparaturen sind dem Fachmann allgemein bekannt. Eine derartige Apparatur zur Mischung von Flüssigkeiten ist beispielsweise in EP 0 097 458 beschrieben.

Statische Mischer sind üblicherweise rohrförmige Apparate mit festen Einbauten, die zur Vermischung der Einzelstoffströme über den Rohrquerschnitt dienen. Statische Mischer können in kontinuierlichen Prozessen zur Durchführung verschiedener verfahrenstechnischer Operationen, wie Mischen, Stoffaustausch zwischen zwei Phasen, chemischen Reaktionen oder Wärmeübertragung eingesetzt werden.

Die Homogenisierung der Einsatzstoffe wird durch ein mittels einer Pumpe erzeugtes Druckgefälle bewirkt. Je nach Art der Strömung im statischen Mischer können zwei grundlegende Mischprinzipien unterschieden werden.

In laminar durchströmten Mischern wird durch Aufteilung und Umlagerung der Strömung der einzelnen Komponenten homogenisiert. Durch eine fortlaufende Verdopplung der Anzahl der Schichten werden die Schichtdicken so weit verkleinert, bis eine vollständige Makro-Vermischung erreicht ist. Die Mikrovermischung durch Diffusionsvorgänge ist abhängig von der Verweilzeit. Für Mischaufgaben mit laminarer Strömung werden Wendelmischer oder Kreuzkanalmischer verwendet. Die laminare Strömung ähnelt einer normalen Rohrströmung mit geringen Scherkräften und einer engen Verweilzeitverteilung.

In turbulent durchströmten Mischern werden gezielt Wirbel erzeugt, um auf diese Art die einzelnen Stoffströme zu homogenisieren. Hierfür sind Kreuzkanalmischer und spezielle Turbulenzmischer geeignet.

Beide Typen von Mischern können für das erfindungsgemäße Verfahren eingesetzt werden.

Die eingesetzten Einbauten bestehen in der Regel aus strömungsteilenden und -umlenkenden, dreidimensionalen geometrischen Körpern, die zu einer Umlagerung, Vermischung und Wiedervereinigung der Einzelkomponenten führen.

Statische Mischer sind handelsübliche Mischapparate und werden beispielsweise von der Fa. Fluitec Georg AG, Neftenbach, Schweiz für verschiedene Anwendungsbereiche angeboten.

Durch die Verwendung der oben beschriebenen statischen Mischer ist eine sehr gute Homogenisierung möglich. Die so hergestellten Polyolmischungen sind lagerstabil und können problemlos mit den anderen zur Herstellung der Polyurethane erforderlichen Komponenten, auf die weiter unten näher eingegangen wird, gemischt werden.

Die erfindungsgemäßen Polyol-Mischungen können mit Polyisocyanaten zu Polyurethanen, insbesondere zu Polyurethan-Weichschaumstoffen, umgesetzt werden.

Als Polyisocyanate werden die üblichen und bekannten (cyclo)aliphatischen und/oder insbesondere aromatischen Polyisocyanate eingesetzt. Zur Herstellung der erfindungsgemäßen Polyurethan-Weichschaumstoffe kommen insbesondere Diphenylmethandiisocyanat (MDI) und/oder Toluylendiisocyanat (TDI) zum Einsatz. Die Polyisocyanate können sowohl in Form der rei-nen Verbindungen als auch in modifizierter Form, beispielsweise als Uretdione, lsocyanurate, Allophanate oder Biurete, insbesondere jedoch in Form von Urethan- und Isocyanatgruppen enthaltenden Umsetzungsprodukten, sogenannten Isocyanat-Prepolymeren, eingesetzt werden.

Zusätzlich zu den Polyolen können auch nledermclekulare Kettenverlängerungsmittel und Vernetzer eingesetzt werden. Diese umfassen niedermolekulare, mehrwertige Alkohole, vorzugsweise Diole und/oder Triole, mit Molekulargewichten kleiner als 400 Da, bevorzugt von 60 bis 300 Da, besonders bevorzugt von 60 bis 200 Da. In Betracht kommen beispielsweise aliphatische, cycloaliphatische und/oder araliphatische Diole, wie z.B. Alkandiole mit 2 bis 14, vorzugsweise 2 bis 6 Kohlenstoffatomen und/oder Dialkylenglykole mit 4 bis 8, vorzugsweise 4 bis 6 Kohlenstoffatomen. Beispiele hierfür sind Glycerin, Trimethylolpropan, Pentaerithryt und/oder Diamine, wie Ethylendiamin, und/oder Aminoalkohole, wie Ethanolamin.

Die Herstellung der Polyurethan-Weichschaumstoffe wird üblicherweise in Anwesenheit von Katalysatoren, Treibmitteln sowie üblichen Hilfs- und/oder Zusatzstoffen durchgeführt.

Als Treibmittel für das erfindungsgemäße Verfahren wird meist Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Verbindungen mit mindestens zwei mit Isocyanatgruppen reaktiven Wasserstoffatomen.

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100°C, vorzugsweise unter 50°C, insbesondere zwischen -50°C und 30°C bei Atmosphärendruck aufweisen, so daß sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylkleton, Ethylacetat und vorzugsweise halogenierte Kohlenwasserstoffe, wie Methylenchlorid, Trichlorfluormethan, Dichlordifluormethan, Dichlormonofluormathan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasser-stoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Verbindungen mit mindestens zwei mit Isocyanatgruppen reaktiven Wasserstoffatomen.

Zur Beschleunigung der Umsetzung zwischen den Verbindungen mit mindestens zwei mit Isocyanatgruppen reaktiven Wasserstoffatomen und Wasser mit den Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'- Tetramethyl-diamino-diethylether, Bis-(dimethylaminopropyl)-hamstoff, N-Methyl- bzw. N-Ethylmorpholin, Dimethylpiperazin, Pyridin, 1,2-Dimethylimidazol, 1-Azoblcyclo-(3,3,0)-octan, Dimethylaminoethanol, 2-(N,N-Di-methylaminoethoxy)ethanol, N,N',N"-Tris-(dialkylaminoalkyl)-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew. %, vorzugsweise 0,5 bis 5 Gew.% Katalysator auf Basis tertiärer Amine und/oder 0,01 bis 0,5 Gew. %, vorzugsweise 0,05 bis 0,25 Gew.% Metallsalze, bezogen auf das Gewicht an Polyhydroxylverbindungen.

Der Reaktionsmischung können auch noch Hilfsmittel und/oder Zusatzstoffe einverleibt werden. Genannt seien beispielsweise Stabilisatoren, Hydrolysenschuimittel, Porenregler, fungistatisch und bakteriostatisch wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester, die in Mengen von 0,2 bis 8, vorzugsweise von 0,5 bis 5 Gewichtsteilen pro 100 Gewichtsteilen Polyhydroxylverbindungen angewandt werden.

Als Flammschutzmittel sind beispielsweise Phosphor- und/oder Halogenatome enthaltende Verbindungen, wie z.B. Trikresylphosphat, Tris-2-chlorethylphosphat, Tris-chlor-propylphosphat und Tris-2,3-dibrompropylphosphat geeignet.

Außer den bereits genannten halogensubstituierten Phosphaten können auch anorganische Flammschutzmittel, beispielsweise Antimontrioxid, Arsenoxid, Ammoniumphosphat und Calciumsulfat, oder Melamin zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel pro 100 Gewichtsteile Polyhydroxylverbindung zu verwenden.

Weitere Angaben über die verwendeten Ausgangsstoffe finden sich beispielsweise im Kunst-stoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate a) mit den Verbindungen mit mindestens zwei aktiven Wasserstoffatomen im Beisein der genannten Treibmittel, Katalysatoren und Hilfs- und/oder Zusatzstoffe zur Reaktion gebracht. Hierbei werden die erfindungsgemäße Polyol-Mischung sowie die genannten Treibmittel, Katalysatoren und Hüfs- und/oder Zusatzstoffe häufig vor der Umsetzung zu einer sogenannten Polyolkomponente vereinigt und diese mit der Isocyanatkomponente zusammengebracht. Die Herstellung der Polyolkomponente kann ebenfalls kontinuierlich mittels statischem Mischer erfolgen.

Die Erfindung ermöglicht die einfache Herstellung von Polyolmischungen aus Graft-Polyolen. Die unter Verwendung der erfindungsgemäßen Polyolmischungen hergestellten Polyurethane haben eine bessere Zellstruktur als solche, bei denen die Mischung auf andere Weise erfolgte.

Die Erfindung soll an den nachstehenden Beilspielen näher beschrieben werden.

Es wurde jeweils ein Polyurethan-Weichschaumstoff mit einer Rohdichte von 30 kg/m³ hergestellt.

### Beispiel 1

27 Gewichtsteile eines Graftpolyols mit einem Feststoffgehalt von 40 Gew.% und einer Hydroxylzahl von 27,3 mgKOH/g, hergestellt durch in-situ Polymerisation von Acrylnitril und Styrol im Gewichtsverhältnis 2:1 in einem Polyetheralkohol mit einer Hydroxylzahl von 46 mgKOH/g, hergestellt durch Anlagerung von Propylenoxid und Ethylenoxid an Glycerin, wurden mit 73 Gewichtsteilen eines Polyetheralkohols mittels eines statischen Mischers des Typs Fluitec CSE-X^{®} gemischt. Die Mischung hatte einen Feststoffgehalt von 10 Gew.%.

Diese Mischung wurde mit 3,5 Gew.-Teilen Wasser, 1,1 Gew.-Teilen Schaumstabilisator Tegostab^{®} BF 2370, 0,2 Gew.-Teilen Aminkatalysator Lupragen^{®} N201/N206 im Gewichtsverhältnis 3:1 und 0,18 Gew.-Teilen Zinnoktoat vermischt.

Diese Mischung wurde bei einem Index von 110 mit Toluylendiisocyanat 20/80 in einer Laboranlage verschäumt.

Das Verschäumverhalten und die mechanischen Werte des Schaums sind in Tabelle 1 festgehalten.

### Vergleichsbeispiel 1

Es wurde verfahren wie in Beispiel 1, nur wurden die Polyetheralkohole getrennt dem Mischkopf zudosiert.

Das Verschäumverhalten und die mechanischen Werte des Schaums sind in Tabelle 1 festgehalten.

### Beispiel 2

Es wurde verfahren wie in Beispiel 1, nur wurden 36 Gew.-Teile des Graftpolyols und 64 Gew.-Teile des Polyetheralkohols eingesetzt. Die Polyolmischung hatte einen Feststoffgehalt von 15 Gew.-%.

Das Verschäumverhalten und die mechanischen Werte des Schaums sind in Tabelle 1 festgehalten.

### Vergleichsbeispiel 2

Es wurde verfahren wie in Beispiel 2, nur wurden die Polyetheralkohole getrennt dem Mischkopf zudosiert.

Das Verschäumverhalten und die mechanischen Werte des Schaums sind in Tabelle 1 festgehalten.

**Tabelle 1**

| Beispiel | | 1 | V1 | 2 | V2 |
|---|---|---|---|---|---|
| **Zellöffnungsverhalten** | | o.k. | kräftig | o. k. | sehr kräftig |
| **Absetzen** | % | 1,0 | 1,5 | 1,0 | 2,5 |
| **Optische Beurteilung des Schaumstoffes** | | gleichmäßig feine Zellstruktur | ungleichmässig feinporig | gleichmäßig feine Zellstruktur | Zellstrukturstörungen, kleine Risse |
| ***Prüfergebnisse*** | | | | | |
| **Rohdichte** | kg/m³ | 27,4 | 27,2 | 28,3 | 27,6 |
| **Eindruckhärte B** | | | | | |
| **bei 25 % Stauchung** | N | 187 | 189 | 203 | 238 |
| **bei 40 % Stauchung** | N | 260 | 261 | 291 | 328 |
| **bei 65 % Stauchung** | N | 504 | 508 | 563 | 654 |
| **Stauchhärte bei 40 % Stauchung** | kPa | 4,5 | 4,5 | 5,2 | 5,6 |
| **Zugfestigkeit** | kPa | 143 | 121 | 145 | 122 |
| **Bruchdehnung** | % | 185 | 177 | 170 | 138 |
| **Druckverformungsrest** | % | 2,5 | 1,8 | 2,5 | 1,4 |
| **Rückprallelastizität** | % | 49.7 | 49,2 | 47,7 | 47,3 |
| **Luftdurchlässigkeit** | mmWS | 5 | 12 | 7 | 22 |

| | | | | | |
|---|---|---|---|---|---|
| V - Vergleichsbeispiel | | | | | |

Die Tabelle zeigt, dass die nach dem erfindungsgemäßen Verfahren hergestellten Schaumstoffe bessere Verarbeitungseigenschaften und bessere mechanische Eigenschaften aufweisen als solche, die nach konventionellen Verfahren hergestellt wurden.

## Patentansprüche

1. Verfahren zur Herstellung von Mischungen aus Polyolen zur Weiterverarbeitung zu Polyurethanen, enthaltend mindestens ein Graft-Polyol, **dadurch gekennzeichnet, dass** die Vermischung der Polyole zwischen der Herstellung der Polyole und der Herstellung der Polyurethane mittels eines kontinuierlichen Mischverfahrens mit einem statischen Mischer erfolgt.

2. Verfahren nach Anspruch 1, **dadurch gekennzeichnet, dass** die Graft-Polyole Graft-Polyetheralkohole sind.

3. Verfahren nach Anspruch 1, **dadurch gekennzeichnet, dass** die Graft-Polyole Graft-Polyesteralkohole sind.

4. Verfahren zur Herstellung von Polyurethanen durch Umsetzung von
a) Polyisocyanaten mit
b) Verbindungen mit mindestens zwei mit Isocyanatgruppen reaktiven Wasserstoffatomen,
**dadurch gekennzeichnet, dass**, als Verbindungen mit mindestens zwei mit Isocyanatgruppen reaktiven Wasserstoffatomen b) Mischungen aus Polyolen verwendet werden, die mindestens ein Graft-Polyol enthalten, und die Vermischung der Polyole zwischen der Herstellung der Polyole und der Herstellung der Polyurethane erfolgt und mittels eines kontinuierlichen Mischverfahrens mit einem statischen Mischer durchgeführt wird.

## Claims

1. A process for preparing mixtures of polyols for further processing to give polyurethanes, comprising at least one graft polyol, which comprises carrying out the mixing of the polyols between the preparation of the polyols and the preparation of the polyurethanes, by means of a continuous mixing process with a static mixer.

2. The process according to claim 1, wherein the graft polyols are graft polyether alcohols.

3. The process according to claim 1, wherein the graft polyols are graft polyester alcohols.

4. A process for preparing polyurethanes by reacting
a) polyisocyanates with
b) compounds having at least two hydrogen atoms reactive toward isocyanate groups,
which comprises using, as compounds b) having at least two hydrogen atoms reactive toward isocyanate groups, mixtures of polyols which comprise at least one graft polyol, and carrying out the mixing of the polyols between the preparation of the polyols and the preparation of the polyurethanes, and by means of a continuous mixing process with a static fixer.

## Revendications

1. Procédé pour la production de mélanges de polyols destinés à la transformation en polyuréthanes, contenant au moins un polyol greffé, **caractérisé en ce que** le mélange des polyols s'effectue au moyen d'un procédé de mélange continu, à l'aide d'un mélangeur statique, entre la production des polyols et la production des polyuréthanes.

2. Procédé selon la revendication 1, **caractérisé en ce que** les polyols greffés sont des polyétheralcools greffés.

3. Procédé selon la revendication 1, **caractérisé en ce que** les polyols greffés sont des polyesteralcools greffés.

4. Procédé pour la production de polyuréthanes par mise en réaction
a) de polyisocyanates avec
b) des composés comportant au moins deux atomes d'hydrogène réactifs avec des groupes isocyanate,
**caractérisé en ce qu'**on utilise comme composées comportant au moins deux atomes d'hydrogène réactifs avec des groupes isocyanate b) des mélanges de polyols qui contiennent au moins un polyol greffé, et le mélange des polyols s'effectue entre la production des polyols et la production des polyuréthanes et au moyen d'un procédé de mélange continu, à l'aide d'un mélangeur statique.
